# FASCICULE DE BREVET EUROPEEN

(11) **EP 2 091 786 B1**
(45) Date de publication et mention de la délivrance du brevet: **04.01.2017**
(21) Numéro de dépôt: 07821977.1
(22) Date de dépôt: 29.10.2007
(51) Int. Cl.: B60R 19/18, B60R 21/34

(54) **DISPOSITIF DE PROTECTION POUR VEHICULE AUTOMOBILE**
SCHUTZEINRICHTUNG FÜR FAHRZEUG
PROTECTIVE DEVICE FOR MOTOR VEHICLE

(30) Priorité: 20.11.2006 FR 0610132
(43) Date de publication de la demande: 26.08.2009
(73) Titulaire: Valeo Systemes Thermiques, 78321 Le Mesnil-Saint-Denis Cedex (FR)
(72) Inventeur: GUINEHUT, Sébastien, 92130 Issy-les-moulineaux (FR); SALIN, Laurent, 75015 Paris (FR); MARECHAL, Laurence, 78370 Plaisir (FR)
(74) Mandataire: Metz, Gaëlle
(86) Numéro de dépôt international: PCT/EP2007/061622
(87) Numéro de publication internationale: WO 2008/061859

(56) Documents cités:
- EP-A- 1 277 622
- EP-A- 1 652 733
- DE-A1-102005 017 956
- FR-A- 2 880 319
- FR-A1- 2 860 198

## Description

La présente invention concerne un dispositif de protection pour véhicule automobile.

Un module de face avant est un élément structurel susceptible d'intégrer divers équipements du véhicule, tels que projecteurs, clignotants, avertisseur sonore, échangeur thermique ou module de refroidissement complet, etc..

Aujourd'hui, les véhicules se doivent de tenir compte également de la protection des piétons en cas de collision avec un véhicule (directive européenne 2003/102/CE) et plus particulièrement de la protection des jambes et de la hanche des piétons.

Les constructeurs automobiles se doivent de limiter l'accélération, la rotation, le cisaillement, la force à l'impact et le moment de flexion reçus par la jambe ou la hanche d'un piéton.

Un dispositif de protection est utilisé pour absorber des chocs frontaux au niveau du module de face avant. On distingue les chocs dits « chocs petite vitesse », pour une vitesse comprise entre 2,5 et 4 km/h, les "chocs moyenne vitesse", pour une vitesse d'environ 16 km/h et les "chocs grande vitesse", pour une vitesse comprise entre 56 et 65 km/h.

En cas de choc avec un piéton ou un obstacle, l'énergie liée au choc est absorbée, de manière classique, sur trois étages du dispositif de protection :
- un premier étage est formé d'un élément absorbeur de chocs agencé pour absorber l'énergie liée notamment au choc piéton;
- un deuxième étage est formé par une poutre pare-chocs agencée pour protéger le véhicule ;
- un troisième étage est formé par des absorbeurs dits absorbeurs de choc réparabilité. Ces absorbeurs sont montés sur des longerons solidaires du châssis du véhicule afin de se déformer en cas de choc moyenne vitesse et absorber le maximum d'énergie, transmettant les efforts aux longerons en cas de choc grande vitesse.

Etant donné que chaque étage réalise une fonction spécifique, chaque étage est constitué d'éléments différents ayant chacun des propriétés spécifiques pour assurer soit une absorption des chocs soit une résistance aux chocs.

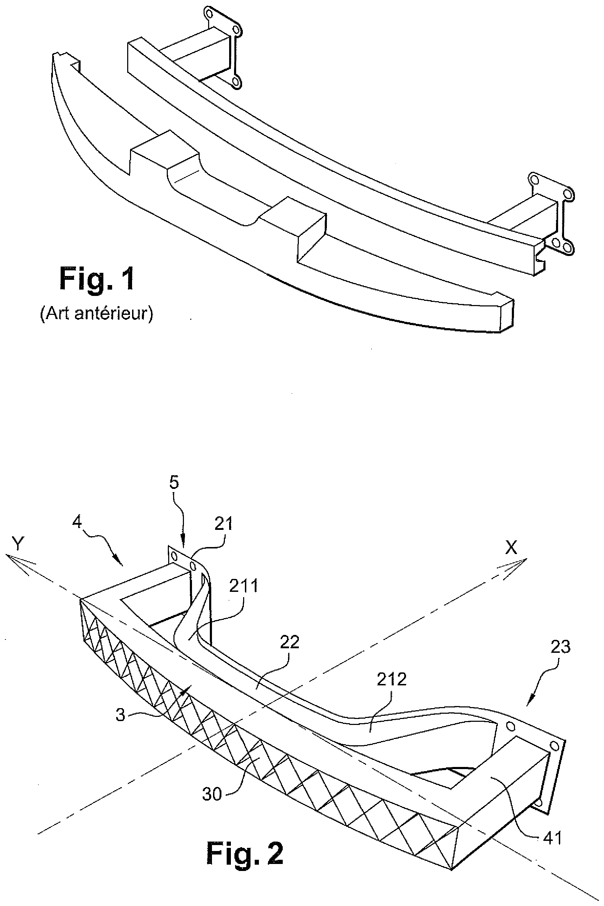

En référence à la figure 1, il est difficile de limiter le nombre d'éléments de tels dispositifs en associant des éléments ayant des propriétés et des fonctions différentes.

Ainsi, pour un dispositif classique comprenant une poutre pare-chocs, un absorbeur de chocs, des absorbeurs de choc réparabilité et des fixations pour les absorbeurs de choc réparabilité, le nombre d'éléments est très important ce qui augmente le coût de fabrication et de montage d'un tel dispositif de protection.

Il a été proposé des poutres pare-chocs intégrant les fixations pour les absorbeurs de choc réparabilité mais le nombre d'éléments nécessaires à l'assemblage reste relativement élevé (quatre éléments), un tel dispositif de protection demeurant de mise en oeuvre assez lourde.

Le document DE 10 2005 017 956 A1 décrit un dispositif de protection selon le préambule de la revendication 1.

C'est pourquoi, la demanderesse a cherché à développer un nouveau type de dispositif de protection afin de pallier au moins certains de ces inconvénients.

L'invention résout le problème posé par le caractéristiques techniques de la revendication 1.

Le dispositif de protection se monte de manière rapide et simple sur un véhicule ce qui diminue les coûts d'assemblage.

De préférence, l'élément de protection et d'absorption comporte au moins un logement contenant un matériau d'absorption de chocs.

Le matériau d'absorption de chocs permet avantageusement de renforcer l'élément de protection et d'absorption en augmentant sa raideur.

De préférence encore, le matériau d'absorption est choisi dans le groupe comprenant une mousse d'aluminium et un matériau composite.

De préférence toujours, l'élément de protection et d'absorption comprend une poutre faisant pare-chocs de résistance aux chocs.

L'invention concerne également un bouclier de protection de module de face avant de véhicule comprenant au moins un dispositif de protection selon l'invention.

L'invention concerne également un module de face avant de véhicule comprenant au moins un dispositif de protection selon l'invention.

Plusieurs dispositifs de protection peuvent être associés dans un unique bouclier afin de mieux répartir le choc et absorber l'énergie liée au choc de manière optimale sur plusieurs voies d'absorption.

L'invention sera mieux comprise à l'aide des figures du dessin annexé sur lequel :
La figure 1 représente une vue en éclaté d'un dispositif de protection selon l'art antérieur ;
La figure 2 représente une vue en perspective avant du dispositif de protection selon l'invention.
Les figures 3A et B représentent deux formes de réalisation du dispositif de protection selon l'invention ;
Les figures 4A et 4B représentent deux autres formes de réalisation du dispositif de protection selon l'invention et
Les figures 5A et5B représentent deux vues en éclaté d'un bouclier de protection avec deux dispositifs de protection selon l'invention.

En référence à la figure 2, le dispositif de protection comprend un élément d'absorption d'énergie et de protection du véhicule 1 comprenant un absorbeur de chocs 3 apte à venir se positionner devant une poutre et des moyens d'absorption d'énergie 4.

Le dispositif de protection comporte ici une poutre faisant pare-chocs 2 fixée à l'élément d'absorption d'énergie et de protection du véhicule 1.

La poutre pare-chocs 2 se présente sous la forme d'une poutre droite s'étendant selon un axe Y dont la partie centrale rectiligne 22 est décalée, selon un axe X, par rapport aux parties latérales rectiligne 21,23 formant des fixation 5. Les parties latérales 21,23 et centrale 22 sont reliées par des parties dites curvilignes 211, 212. Cependant, une poutre droite pourrait également convenir.

Autrement dit, dans l'exemple représenté à la figure 2, la poutre pare-chocs 2 comporte une partie centrale 22 reliée à deux extrémités 21 et 23 par des portions 211 et 212. Les portions 211 et 212 présente une double inflexion. Chaque inflexion est située au niveau des parties curvilignes 211 et 212, c'est-à-dire dans les extrémités des parties curvilignes proches respectivement de la partie centrale 22 et de l'extrémité 21 ou 23.

La partie centrale 22 et les extrémités 21 et 23 s'expriment de manière sensiblement parallèle, de sorte que la partie centrale 22 est déportée par rapport aux extrémités 21 et 23.

Le déport de la partie centrale 22 par rapport aux extrémités 21,23 est réalisé dans une direction qui est sensiblement confondue avec l'axe du véhicule. Autrement dit, le déport de la partie centrale 22 est réalisé vers l'avant du véhicule. Cela permet à la partie centrale 22 de former une partie centrale d'absorption déportée vers l'avant.

Dans le mode de réalisation représenté à la figure 2, le déport entre la partie centrale 22 et les extrémités 21 et 23 est réalisé avec une profondeur prévue pour loger précisément des absorbeurs de chocs réparabilité qui seront décrits plus loin.

Ici, la longueur de la partie centrale 22 selon l'axe Y est inférieure à l'espacement existant entre les fixations 5.

L'élément d'absorption et de protection 1 est ici constitué d'une structure d'absorption de chocs (S1) monomatière formée de cellules se présentant sous forme de canaux 30 de section carrée. La structure d'absorption en nid d'abeilles, comme représentée sur la figure 2, permet aux canaux 30 de se déformer sous effort tout en demeurant rigide. L'absorbeur de chocs 3 de l'élément d'absorption et de protection 1 s'étend selon l'axe Y afin de recouvrir la poutre pare-chocs 2.

L'élément d'absorption et de protection 1 intègre ici des absorbeurs de choc réparabilité 4. En référence à la figure 2, les absorbeurs de choc réparabilité 4 se présentent sous la forme d'une poutre rigide orthogonale à l'absorbeur 3, les absorbeurs 4 s'étendant à partir des extrémités de l'absorbeur 3 selon l'axe X.

Un dispositif de protection selon l'invention qui comprend un absorbeur de chocs 3 apte à venir se positionner devant une poutre et des absorbeurs de choc réparabilité 4 de protection du véhicule en un seul élément de protection et d'absorption 1 permet ainsi de dégager l'espace occupé par les absorbeurs de choc réparabilité dans l'art antérieur et ceci tout en renforçant la modularité de l'ensemble d'absorption de chocs.

Les absorbeurs de chocs réparabilité 4 qui sont ici placés "devant" la poutre pare-chocs 2, sont maintenant rendus plus accessibles par rapport que les absorbeurs de chocs réparabilité de l'art antérieur.

Lors d'un choc, les absorbeurs de chocs réparabilité 4 et la partie centrale 22 seront sollicités sensiblement simultanément, du fait qu'ils sont sensiblement au même niveau.

Lorsque l'absorbeur de chocs 3 s'est déformé pour absorber l'énergie du choc, l'énergie résiduelle du choc est absorbée par les absorbeurs de choc réparabilité 4 et la poutre pare-chocs 2.

Les fixations 5 sont ici intégrées au niveau des parties latérales 21,23 de la poutre 2 et correspondent avec les extrémités libres des absorbeurs de choc réparabilité 4. Les fixations 5 se présentent ici sous forme de vis de fixation mais des clips, des brides, de la colle ou tout autre moyen de fixation équivalent pourrait également convenir.

Lors de l'assemblage, les extrémités libres des absorbeurs de choc réparabilité 4 sont fixées à l'aide de vis de fixation permettant de rendre l'ensemble monobloc. Les deux éléments ainsi assemblés forment un dispositif de protection prêt à monter sur le module de face avant.

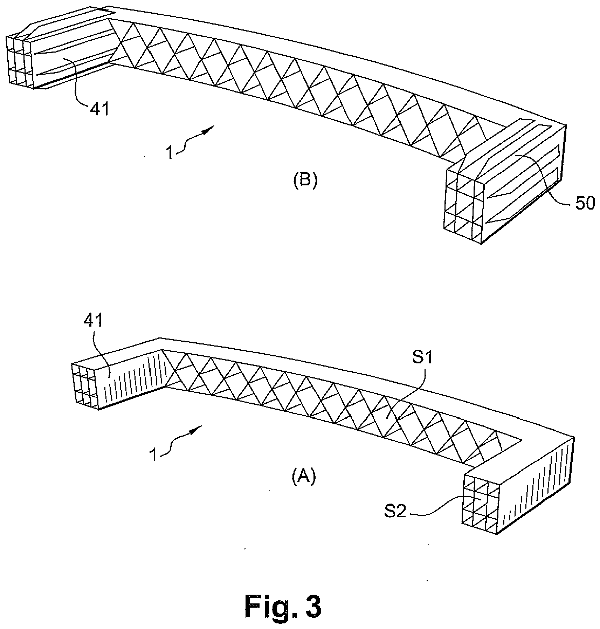

En référence à la figure 3A, chaque absorbeur de choc réparabilité 4 comprend ici un logement 41 rigide dont l'intérieur est constitué en une structure d'absorption de chocs cellulaire (S2) formant des canaux 30, les canaux 30 étant de section carrée. Le logement 41 est sensiblement cylindrique, le logement s'étendant à partir de l'absorbeur 3 vers la poutre 2 selon l'axe X, la face transversale libre du logement 41 étant agencée pour se fixer aux fixations 5 intégrées dans la poutre 2, les logements 41 de l'absorbeur 3 étant en appui sur la poutre 2.

En référence à la figure 3B, l'élément d'absorption et de protection 1 comprend des nervures 50 de renfort. Les nervures 50 sont disposées rectilignement sur les parois des absorbeurs de choc réparabilité 4 selon l'axe X pour rigidifier le logement 41. L'élément d'absorption et de protection 1 avec les nervures 50 peut absorber une énergie importante et ainsi résister de manière plus efficace à un choc.

Un mode de réalisation non représenté propose que les nervures soient remplacées par un réseau de nervures. Ainsi, on pourra moduler la rigidité de l'enveloppe formant absorbeurs de choc réparabilité 4.

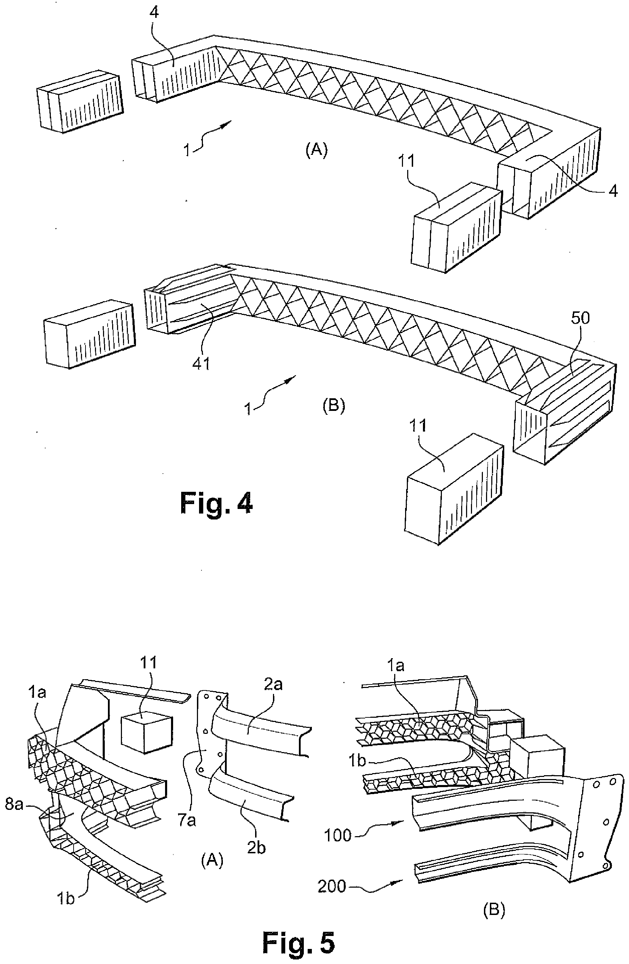

En référence à la figure 4B, chaque absorbeur de choc réparabilité 4 comprend ici un logement 41 dont l'intérieur est rempli d'un matériau d'absorption de chocs 11 se présentant sous la forme d'une mousse d'aluminium. Ce matériau d'absorption rigidifie le logement 41 et peut se déformer et absorber de l'énergie en cas de choc. Le matériau d'absorption 11 se loge ici dans la partie absorbeur de choc réparabilité 4 et partiellement dans l'absorbeur 3. La présence d'un matériau d'absorption de chocs 11 uniquement dans la partie absorbeur de choc réparabilité 4 pourrait également convenir.

Comme représenté sur la figure 4A, pour chaque absorbeur de choc réparabilité 4, le logement 41 est divisé en deux volumes égaux par une cloison 42 reliant la cloison supérieure à la cloison inférieure du logement 41.

Les deux volumes des logements 41, délimités par la cloison 42, reçoivent respectivement deux enveloppes plastiques 11. L'élément d'absorption et de protection 1 est renforcé par la cloison 42 ainsi que par les enveloppes plastiques pour absorber les chocs. Cette forme de réalisation fournit ainsi une raideur supplémentaire à l'élément 1 tout en conservant de bonnes propriétés d'absorption.

En référence à la figure 4B, L'élément d'absorption et de protection 1 comprend des nervures 50 de renfort. Les nervures 50 sont disposées rectilignement sur les parois des absorbeurs de choc réparabilité 4 selon l'axe X pour rigidifier le logement 41. L'élément d'absorption et de protection 1 avec les nervures 50 peut absorber une énergie importante et ainsi résister de manière plus efficace à un choc.

Dans une autre forme de réalisation non représentée, une mousse d'aluminium est ajoutée dans l'élément d'absorption et de protection 1 pour renforcer la résistance aux chocs. La mousse est ajoutée dans le logement 41 afin de renforcer les absorbeurs de choc réparabilité 4. L'ajout de mousse dans l'absorbeur 3 permet également d'améliorer l'absorption des chocs. L'ajout de mousse dans certaines cellules ou canaux permet d'adapter le dispositif de protection en définissant des zones d'absorption.

Un matériau d'absorption de chocs 11 se présentant sous la forme d'un matériau composite pourrait également convenir.

Lorsque le matériau d'absorption de chocs 11 a été inséré ou ajouté dans l'élément d'absorption et de protection 1, celui-ci est monté sur la poutre pare chocs 2 pour former le dispositif de protection.

Le dispositif de protection se monte en tant que module d'un véhicule ou s'intègre directement à un bouclier de protection pour un module de face avant de véhicule afin d'absorber une variété de chocs aussi bien frontaux que latéraux.

Certains véhicules nécessitent plusieurs dispositifs de protection afin de protéger les piétons et les équipements du véhicule. En référence à la figure 5, il est proposé des boucliers pour véhicule automobile ayant une voie principale dite voie haute 100 et une voie additionnelle dite voie basse 200 d'absorption de chocs, chacune des voies comprenant un dispositif de protection selon l'invention.

Afin de faciliter le montage des deux dispositifs de protection, les poutres pare-chocs 2 des deux dispositifs forment un ensemble monobloc. Les poutres 2 sont disposées horizontalement sur le module de face avant, parallèlement l'une à l'autre. Les extrémités de la poutre supérieure 2a étant reliées aux extrémités de la poutre inférieure 2b par des poutres verticales 7a ou jambages. L'ensemble des poutres pare-chocs et des jambages est de préférence réalisé en une seule pièce. L'ensemble des poutres pare-chocs et des jambages 2 est associé à un ensemble d'absorption et de protection.

L'ensemble d'absorption et de protection comprend les deux éléments d'absorption et de protection 1a, 1b disposés horizontalement sur le module de face avant parallèlement l'une à l'autre. Les extrémités de l'élément d'absorption et de protection supérieur 1a étant reliées aux extrémités de l'élément d'absorption et de protection inférieur 1b par des absorbeurs verticaux 8a. L'ensemble d'absorption et de protection est de préférence réalisé en une seule pièce.

Ainsi, l'assemblage du bouclier de protection, comprenant deux voies d'absorption, est facilité car il suffit de fixer les extrémités libres des deux éléments d'absorption et de protection 1a, 1b au niveau des fixations des deux poutres pare-chocs 2a, 2b.

## Revendications

1. Dispositif de protection pour un véhicule automobile comprenant une poutre pare-chocs (2) de résistance aux chocs et des absorbeurs de choc réparabilité (4) de protection du véhicule, ledit dispositif comprenant en outre un absorbeur de chocs (3) apte à venir se positionner devant ladite poutre pare-chocs (2), et les absorbeurs de choc réparabilité (4) sont formés en un seul élément de protection et d'absorption (1), les absorbeurs de choc réparabilité (4) se présentant sous la forme d'une poutre rigide orthogonale à l'absorbeur (3) et s'étendant à partir des extrémités de l'absorbeur (3), le dispositif **caractérisé par le fait que** la poutre pare-chocs (2) se présente sous la forme d'une poutre droite dont la partie centrale (22) est décalée par rapport aux parties latérales (21,23), formant deux extrémités (21,23) ladite poutre pare-chocs (2) comporte une partie centrale (22) étant reliée aux deux extrémités (21 ; 23) par des portions (211 ; 212), et des fixations (5) sont intégrées au niveau des parties latérales (21,23) et correspondent avec les extrémités libres des absorbeurs de choc réparabilité (4), lesdites portions (211 ; 212) présentant une double inflexion et chaque inflexion étant située au niveau de parties curvilignes , les extrémités des parties curvilignes étant proches respectivement de la partie centrale (22) et de chaque extrémité (21,23), ladite partie centrale (22) et les extrémités s'exprimant de manière sensiblement parallèle, de sorte que la partie centrale (22) est déportée par rapport aux extrémités (21 ; 23), et le déport entre ladite partie centrale (22) et les extrémités (21 ; 23) étant réalisé avec une profondeur prévue pour loger précisément lesdits absorbeurs de chocs réparabilité (4).

2. Dispositif selon la revendication 1, dans lequel l'élément de protection et d'absorption (1) comporte un logement (41) contenant un matériau (11) d'absorption de chocs.

3. Dispositif selon la revendication 2, dans lequel le matériau (11) d'absorption est choisi dans le groupe comprenant une mousse d'aluminium et matériau composite.

4. Dispositif selon la revendication 1 à 3, dans lequel l'élément de protection et d'absorption (1) comprend une portion cellulaire.

5. Dispositif selon l'une des revendications 1 à 4, dans lequel il est prévu une pluralité de nervures (50) de renfort sur l'élément de protection et d'absorption (1).

6. Bouclier de protection de module de face avant de véhicule, comprenant au moins un dispositif de protection selon l'une des revendications 1 à 5.

7. Bouclier de protection de module de face avant de véhicule, comprenant deux dispositifs de protection selon l'une des revendications 1 à 5.

8. Bouclier de protection selon la revendication 7, dans lequel les deux éléments de protection et d'absorption (la, 1b) des deux dispositifs de protection forment un ensemble monobloc.

9. Module de face avant pour véhicule automobile comprenant un dispositif de protection selon l'une des revendications 1 à 5.

## Patentansprüche

1. Schutzvorrichtung für ein Kraftfahrzeug, umfassend einen Stoßfängerträger (2) zum Widerstand gegen Stöße und Dämpfer (4) für reparierbare Stöße zum Schutz des Fahrzeugs, wobei die Vorrichtung darüber hinaus einen Stoßdämpfer (3) umfasst, der sich vor dem Stoßfängerträger (2) positionieren kann, und die Dämpfer (4) für reparierbare Stöße als ein einziges Schutz- und Dämpfungselement (1) ausgeformt sind, wobei die Dämpfer (4) für reparierbare Stöße in Form eines starren Trägers senkrecht zum Dämpfer (3) ausgebildet sind und sich ausgehend von den Enden des Dämpfers (3) erstrecken, **dadurch gekennzeichnet, dass** der Stoßdämpferträger (2) in Form eines geraden Trägers ausgebildet ist, dessen mittlerer Teil (22) in Bezug auf die seitlichen Teile (21, 23), die zwei Enden (21, 23) bilden, versetzt ist, der Stoßfängerträger (2) einen mittleren Teil (22) auf weist, der mit den beiden Enden (21; 23) durch Abschnitte (211; 212) verbunden ist, und Befestigungen (5) sind im Bereich der seitlichen Teile (21, 23) integriert und stimmen mit den freien Enden der Dämpfer (4) für reparierbare Stöße überein, wobei die Abschnitte (211; 212) eine doppelte Biegung aufweisen und jede Biegung sich im Bereich krummliniger Teile befindet, wobei sich die Enden der krummlinigen Teile nahe zum mittleren Teil (22) beziehungsweise zu jedem Ende (21, 23) befinden, wobei sich der mittlere Teil (22) und die Enden im Wesentlichen parallel erstrecken, dergestalt, dass der mittlere Teil (22) in Bezug auf die Enden (21; 23) versetzt ist und der Versatz zwischen dem mittleren Teil (22) und den Enden (21; 23) mit einer Tiefe ausgebildet ist, die vorgesehen ist, um die Dämpfer (4) für reparierbare Stöße präzise aufzunehmen.

2. Vorrichtung nach Anspruch 1, bei der das Schutz-und Dämpfungselement (1) eine Aufnahme (41) aufweist, die einen Werkstoff (11) zur Dämpfung von Stößen enthält.

3. Vorrichtung nach Anspruch 2, bei der der Werkstoff (11) zur Dämpfung aus der einen Aluminiumschaum und Verbundwerkstoff umfassenden Gruppe ausgewählt ist.

4. Vorrichtung nach Anspruch 1 bis 3, bei der das Schutz- und Dämpfungselement (1) einen Abschnitt mit Zellenstruktur umfasst.

5. Vorrichtung nach einem der Ansprüche 1 bis 4, bei der eine Vielzahl von Verstärkungsrippen (50) am Schutz- und Dämpfungselement (1) vorgesehen ist.

6. Schutzschild eines Fahrzeug-Frontmoduls, welches mindestens eine Schutzvorrichtung nach einem der Ansprüche 1 bis 5 umfasst.

7. Schutzschild eines Fahrzeug-Frontmoduls, welches zwei Schutzvorrichtungen nach einem der Ansprüche 1 bis 5 umfasst.

8. Schutzschild nach Anspruch 7, bei dem die beiden Schutz- und Dämpfungselemente (1a, 1b) der beiden Schutzvorrichtungen eine einstückige Anordnung bilden.

9. Frontmodul für ein Kraftfahrzeug, welches eine Schutzvorrichtung nach einem der Ansprüche 1 bis 5 umfasst.

## Claims

1. Protective device for a motor vehicle, comprising a bumper beam (2) for withstanding impacts and repairability impact absorbers (4) for protecting the vehicle, said device further comprising an impact absorber (3) able to be positioned in front of said bumper beam (2), and the repairability impact absorbers (4) are formed as a single protection and absorption element (1), the repairability impact absorbers (4) being in the form of a rigid beam perpendicular to the absorber (3) and extending from the ends of the absorber (3), the device being **characterized in that** the bumper beam (2) is in the form of a straight beam of which the central part (22) is offset with respect to the lateral parts (21, 23), forming two ends (21, 23), said bumper beam (2) comprises a central part (22) being connected to the two ends (21; 23) by portions (211; 212), and attachments (5) are integrated at the lateral parts (21, 23) and correspond to the free ends of the repairability impact absorbers (4), said portions (211; 212) having a double inflection and each inflection being located at curved parts, the ends of the curved parts being close respectively to the central part (22) and to each end (21, 23), said central part (22) and the ends extending essentially parallel, such that the central part (22) is offset with respect to the ends (21; 23), and the offset between said central part (22) and the ends (21; 23) being created with a depth provided in order to accommodate precisely said repairability impact absorbers (4).

2. Device according to Claim 1, in which the protection and absorption element (1) comprises a recess (41) containing an impact-absorbing material (11).

3. Device according to Claim 2, in which the absorbing material (11) is chosen from the group comprising an aluminium foam and composite material.

4. Device according to Claims 1 to 3, in which the protection and absorption element (1) comprises a cellular portion.

5. Device according to one of Claims 1 to 4, in which a plurality of reinforcing ribs (50) is provided on the protection and absorption element (1).

6. Protective shield for a vehicle front end module, comprising at least one protective device according to one of Claims 1 to 5.

7. Protective shield for a vehicle front end module, comprising two protective devices according to one of Claims 1 to 5.

8. Protective shield according to Claim 7, in which the two protection and absorption elements (1a, 1b) of the two protective devices form a one-piece assembly.

9. Front end module for a motor vehicle, comprising a protective device according to one of Claims 1 to 5.
